# EUROPEAN PATENT APPLICATION

(11) **EP 4 645 126 A1**
(43) Date of publication of application: **05.11.2025**
(21) Application number: 24173922.6
(22) Date of filing: 02.05.2024
(51) Int. Cl.: G06F 21/30, H04L 9/32, H04L 9/40, H04W 12/06

(54) **COMMUNICATION SYSTEM WITH TRUST LEVELS AND RELATED METHOD**

(30) Priority: 30.04.2024 EP 24173624
(71) Applicant: GN Hearing A/S, 2750 Ballerup (DK)
(72) Inventor: DREILING, Philippe, 2750 Ballerup (DK); BJØRSTRUP, Hans Henrik, 2750 Ballerup (DK)
(74) Representative: Aera A/S

(57) **Abstract**

An electronic device and a method of operating an electronic device comprising processor circuitry is disclosed, the method comprising receiving media data associated with a media stream, the media data comprising one or both of audio data representative of audio and video data representative of video; determining a trust level associated with the media stream based on the media data; and providing an output indicative of the trust level.

## Description

The present disclosure relates to a communication system, devices of a communication system including an electronic device, and related methods including a method of operating an electronic device.

### BACKGROUND

The developments of communication systems for audio and/or video conferencing and artificially generated voice and/or video also known as deepfaking presents new challenges for users participating in such audio and/or video conferences as it can be difficult to trust whether a real person or merely a deepfaked version of the person is participating.

### SUMMARY

Accordingly, there is a need for systems, devices, and methods with improved security and authentication.

A method, such as a method of operating an electronic device comprising one or more processors, is disclosed, the method comprising receiving, e.g. during a conference, such as a video conference and/or an audio conference, media data associated with a media stream, the media data comprising one or both of audio data representative of audio and video data representative of video; determining a trust level associated with the media stream based on the media data; and providing an output indicative of the trust level.

An electronic device, such as a communication device or an audio device, is disclosed, the electronic device comprising an interface, memory circuitry and processor circuitry, the processor circuitry configured to receive, via the interface and optionally during a conference, such as a video conference and/or an audio conference, media data associated with a media stream, the media data comprising one or both of audio data representative of audio and video data representative of video; determine a trust level associated with the media stream based on the media data; and provide, via the intercace, an output indicative of the trust level.

It is an advantage of the present disclosure that the method and electronic device provides improved feedback and/or awareness.

It is an important advantage of the disclosure that a conference participant/user is provided with an indication, such as a real-time, of trust in the conference and optionally any changes thereto.

Advantageously, the present disclosure allows for detection of changes in device setup during a conference, such as change of from using audio device microphone(s) to using communication device microphone(s) and/or change from using video device camera to using communication device camera or the other way round. Changes in device setup during a conference may influence and change the trust level which can be communicated to a participant during the conference which in turn reduces the risk of impersonation attacks being successful.

Further, the risk of deep fake attacks being successful is highly reduced. In other words, the present disclosure provides improved protection against impersonation attacks, such as deep fakes.

### BRIEF DESCRIPTION OF THE DRAWINGS

The above and other features and advantages of the present invention will become readily apparent to those skilled in the art by the following detailed description of exemplary embodiments thereof with reference to the attached drawings, in which:
Fig. 1 schematically illustrates an exemplary communication system according to this disclosure,
Fig. 2 is a flow diagram of an exemplary method according to this disclosure, and
Fig. 3 shows an example display of a communication device according to this diclosure.

### DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

A communication system and devices thereof are disclosed. For example, electronic devices such as communication devices and or audio devices for a communication system are disclosed. Further, methods of operating and then chronic device such as methods for operating a communication device and methods for operating an audio device are disclosed.

The present disclosure allows for determination and display of trust level associated with a conference or communication session, such as a teleconference and or video conference.

In the present context, a trust level may be seen as indicative of a level or degree to which the user or participant can rely on an actual participant or user speaking and or being imaged in the teleconference or video conference. The hearing device may be configured to be worn at an ear of a user and may be a hearable or a hearing aid, wherein the processor is configured to compensate for a hearing loss of a user.

As used herein, the term "key" refers to a cryptographic key, i.e. a piece of data, (e.g. a string, a parameter) that determines a functional output of a cryptographic algorithm. For example, during encryption, the key allows a transformation of a plaintext into a cipher-text and vice versa during decryption. The key may also be used to verify a digital signature and/or a message authentication code, MAC. A key is so called a symmetric key when the same key is used for both encryption and decryption. In asymmetric cryptography or public key cryptography, a keying material is a key pair, so called a private-public key pair comprising a public key and a private key. In an asymmetric or public key cryptosystem (such as Rivest Shamir Adelman, RSA, cryptosystem, or Elliptic curve cryptography, ECC), the public key is used for encryption and/or signature verification while the private key is used for decryption and/or signature generation.

As used herein the term "identifier" refers to a piece of data that is used for identifying, such as for categorizing, and/or uniquely identifying. The identifier may be in a form of a word, a number, a letter, a symbol, a list, an array, or any combination thereof. For example, the identifier as a number may be in the form of an integer, such as unsigned integer, uint, with a length of e.g. 8 bits, 16 bits, 32 bits, etc., such as an array of unsigned integers. A device identifier may indicate or identify a device, such as a hardware identifier. A hardware identifier can include a hardware number of the audio device and/or a serial number of the audio device.

In the present context, a signature is a digital signature created by applying a digital signature scheme to data, e.g. using a digital key.

In one or more examples, the electronic device is a communication device. The communication device may be a smartphone, a tablet computer, a laptop computer, or a stationary personal computer, e.g. with a communication application, such installed thereon. The communication device may comprise one or more microphones and/or one or more loudspeakers also denoted receivers. The communication device may comprise one or more processors also denoted processor circuitry, and an interface. The interface of the communication device may comprise a wireless transceiver for wireless connection to other devices and/or one or more connectors for wired connection to other devices. In other words, the communication device may be configured for wired or wireless communication with an audio device. The communication device may be configured for wired or wireless communication with another communication device, e.g. via the Internet or other network connection.

In one or more examples, the electronic device is an audio device. The audio device may comprise one or more microphones and/or one or more loudspeakers also denoted receivers. The audio device may comprise one or more processors also denoted processor circuitry, and an interface. The interface of the audio device may comprise a wireless transceiver for wireless connection to other devices and/or one or more connectors for wired connection to other devices. The audio device may be configured for wired or wireless communication with the communication device.

In one or more examples, the audio device may be an earbud, speakerphone, a loudspeaker device, a microphone device, a headphone, a headset, a hearing aid, etc.

The hearing device may be a hearing aid of the behind-the-ear (BTE) type, in-the-ear (ITE) type, in-the-canal (ITC) type, receiver-in-canal (RIC) type, receiver-in-the-ear (RITE) type or microphone-and-receiver-in-the- ear (MaRIE) type. The hearing device may be a binaural hearing aid in a binaural hearing system. The binaural hearing system may comprise a first hearing aid and a second hearing aid, wherein the first hearing aid and/or the second hearing aid may be the hearing device(s) as disclosed herein.

The hearing device may be configured for wireless communication with one or more devices, such as with another hearing device, e.g. as part of a binaural hearing system, and/or with one or more accessory devices, such as a smartphone and/or a smart watch. Accordingly, the hearing device may comprise a transceiver module. The hearing device/transceiver module optionally comprises an antenna for converting one or more wireless input signals, e.g. a first wireless input signal and/or a second wireless input signal, to antenna output signal(s). The wireless input signal(s) may origin from external source(s), such as spouse microphone device(s), wireless TV audio transmitter, and/or a distributed microphone array associated with a wireless transmitter. The wireless input signal(s) may origin from another hearing device, e.g. as part of a binaural hearing system, and/or from one or more accessory devices

A method of operating an electronic device comprising one or more processors is disclosed. The method comprises receiving media data associated with a media stream, the media data optionally comprising one or both of audio data representative of audio and video data representative of video; determining a trust level e.g. associated with the media stream optionally based on the media data; and providing an output indicative of the trust level. The media data optionally comprises media data from other communication devices participating in a conference, such as an telephone conference (only audio) or a video conference (audio and/or video).

In one or more examples, a method of operating an electronic device comprising one or more processors is disclosed, the method comprising receiving media data associated with a media stream, the media data comprising one or both of audio data representative of audio and video data representative of video; determining a trust level associated with the media stream based on the media data; and providing an output indicative of the trust level.

In one or more examples, the audio data comprises audio device data indicative of an audio device used for capturing the audio, and determining a trust level based on the media data comprises determining the trust level based on the audio device data.

In one or more examples, the audio device data comprises an audio device signature, and wherein determining the trust level based on the audio device data comprises verifying the audio device signature.

In one or more examples, the audio device data comprises a message authentication code, MAC, and wherein determining the trust level based on the audio device data comprises verifying the message authentication code, MAC.

In one or more examples, a verified audio device signature and/or message authentication code, MAC, increases the trust level. In other words, a trust level based on verified and/or authenticated audio device data may be higher than a trust level not based on verified/authenticated audio device data, e.g. when the transmitting audio device does not have a signing/authentication capability, such as indicated by a security capability parameter of the audio device data. A trust level based on verified and/or authenticated audio device data may be higher than a trust level based on non-verified and/or non-authenticated audio device data. A trust level not based on audio device data, e.g. when the transmitting audio device does not have a signing/authentication capability, may be higher than a trust level based on non-verified and/or non-authenticated audio device data.

Thus, the media data, such as the audio device data and/or video device data, may comprise one or more capability parameters, wherein determining the trust level is based on the one or more capability parameters. In other words, the method comprises performing capability signalling between electronic devices, such as between audio devices, between communication devices, and/or between audio device and communication device.

Non-verified audio device data may decrease the trust level. In one more examples, a non-verification of, e.g. failure to verify, the audio device data may lead to a trust level indicative of no or very low trust.

In one or more examples, the audio device data may comprise a security capability parameter indicative of security capabilities, such as signing/authentication capability, of the audio device transmitting the audio data. In one or more examples, the security capability parameter may be zero or "Null" to indicate no signing/authentication capability of the audio device collecting and/or transmitting the audio data. Determining a trust level may be based on the security capability parameter of the audio device.

In one or more examples, the audio data may comprise an audio mute parameter indicative of whether audio from the audio device transmitting the audio data is muted. In one or more examples, the audio mute parameter may be set or "1" to indicate muting of the audio. Determining a trust level may be based on the audio mute parameter. For example, the trust level may be reduced when audio is muted compared to non-muted audio.

In one or more examples, the audio device data comprises an audio device identifier, the method comprising obtaining an audio key, e.g. based on the audio device identifier, and wherein verifying the audio device signature is based on the audio key. The audio device identifier of the audio device data optionally identifies the audio device used for capturing the audio.

In one or more examples, the trust level is based on the audio device identifier. For example, a headset may have a higher trust than a conference audio device.

Obtaining an audio key based on the audio device identifier may comprise transmitting, e.g. to a server device, a key request including the audio device identifier and receiving the audio key, e.g. from the server device.

In one or more examples, the video data comprises video device data indicative of a video device used for capturing the video, and wherein determining a trust level based on the media data comprises determining the trust level based on the video device data.

In one or more examples, the video device data comprises a video device signature, and wherein determining the trust level based on the video device data comprises verifying the video device signature.

In one or more examples, the video device data comprises a message authentication code, MAC, and wherein determining the trust level based on the video device data comprises verifying the message authentication code, MAC.

In one or more examples, a verified video device signature and/or message authentication code, MAC, increases the trust level. In other words, a trust level based on verified and/or authenticated video device data may be higher than a trust level not based on video device data, e.g. when the transmitting video device does not have a signing/authentication capability. A trust level based on verified and/or authenticated video device data may be higher than a trust level based on non-verified and/or non-authenticated video device data. A trust level not based on video device data, e.g. when the transmitting video device does not have a signing/authentication capability, may be higher than a trust level based on non-verified and/or non-authenticated video device data.

Non-verified video device data may decrease the trust level. In one more examples, a non-verification of, e.g. failure to verify, the video device data may lead to a trust level indicative of no or very low trust.

In one or more examples, the video device data may comprise a security capability parameter indicative of security capabilities, such as signing/authentication capability, of the video device transmitting the video data. In one or more examples, the security capability parameter may be zero to indicate no signing/authentication capability of the video device collecting and/or transmitting the video data. Determining a trust level may be based on the security capability parameter of the video device.

In one or more examples, the video data may comprise a video mute parameter indicative of whether video from the video device transmitting the video data is paused, turned off, or "muted". In one or more examples, the video mute parameter may be set or "1" to indicate muting of the video. Determining a trust level may be based on the video mute parameter. For example, the trust level may be reduced when video is muted compared to non-muted video, i.e. when the camera is turned off, deactivated, or paused compared to when the camera is turned on or activated.

In one or more examples, the video data may comprise a background parameter indicative of whether the video from the video device transmitting the video data includes a background and/or a background filter. In one or more examples, the background parameter may be set or "1" to indicate use of background in the video. Determining a trust level may be based on the background parameter. For example, the trust level may be reduced when video uses a background and/or a background filter compared to when no background and/or background filter is used.

In one or more examples, the video device data comprises a video device identifier, the method comprising obtaining a video key based on the video device identifier, and wherein verifying the video device signature is based on the video key.

The video device identifier of the video device data optionally identifies the video device used for capturing the video.

In one or more examples, the trust level is based on the video device identifier. For example, a video device with a fixed location may have a higher trust than a mobile video device.

Obtaining a video key based on the video device identifier may comprise transmitting, e.g. to a server device, a key request including the video device identifier and receiving the video key, e.g. from the server device.

In one or more examples, the media data comprises communication device data indicative of a communication device used for transmitting the media data, and wherein determining a trust level based on the media data comprises determining the trust level based on the communication device data.

In one or more examples, the communication device data comprises a communication device signature, and wherein determining the trust level based on the media data comprises verifying the communication device signature.

In one or more examples, the communication device data comprises a message authentication code, MAC, and wherein determining the trust level based on the communication device data comprises verifying the message authentication code, MAC.

In one or more examples, a verified communication device signature and/or message authentication code, MAC, increases the trust level. In other words, a trust level based on verified and/or authenticated communication device data may be higher than a trust level not based on communication device data, e.g. when the transmitting communication device does not have a signing/authentication capability. A trust level based on verified and/or authenticated communication device data may be higher than a trust level based on non-verified and/or non-authenticated communication device data. A trust level not based on communication device data, e.g. when the transmitting communication device does not have a signing/authentication capability, may be higher than a trust level based on non-verified and/or non-authenticated communication device data.

Non-verified communication device data may decrease the trust level. In one more examples, a non-verification of, e.g. failure to verify, the communication device data may lead to a trust level indicative of no or very low trust.

In one or more examples, the communication device data comprises a communication device identifier, the method comprising obtaining a communication key, e.g. based on the communication device identifier, and wherein verifying the communication device signature is based on the communication key.

The communication device identifier of the communication device data optionally identifies the communication device used for transmitting the media data.

Obtaining a communication key based on the communication device identifier may comprise transmitting, e.g. to a server device, a key request including the communication device identifier and receiving the communication key, e.g. from the server device.

Determining a trust level may comprise selecting the trust level from a set of trust levels, such as from a least three trust levels, e.g. four, five, six, seven, eight, nine, ten, or more trust levels.

A trust level may be indicated by an integer, e.g. from 1 to 3, 1 to 5, or from 1 to 10, e.g. where the value 1 indicates no trust and the maximum value, e.g. 3, 5, or 10 indicates highest level of trust, optionally including associated label, e.g. no trust, low trust, medium trust, high trust, maximum trust etc.

A trust level may be indicated by a value in a range, such as a value in the range from 0 to 1, e.g. where the start value, e.g. 0, indicates no trust and the end value, e.g. 1, indicates highest level of trust, optionally including associated label, e.g. no trust, low trust, medium trust, high trust, maximum trust etc.

Determining a trust level may comprise selecting a trust level indicative of medium trust in accordance with a determination that no audio device data are available for determination of trust.

Determining a trust level may comprise selecting a trust level indicative of medium trust in accordance with a determination that no video device data are available for determination of trust.

Determining a trust level may comprise selecting a trust level indicative of medium trust in accordance with a determination that no communication device data are available for determination of trust.

Determining a trust level may comprise selecting a trust level indicative of low or no trust in accordance with a determination that verification of any of the audio device data, the video device data, and the communication device data fails.

Determining a trust level may comprise selecting a trust level indicative of above medium or high trust in accordance with a determination that verification of the audio device data, the video device data, and the communication device data succeeds.

In one or more examples, determining a trust level is based on one or more conference settings associated with the conference wherein the media data are received. Conference settings may be distributed with the conference invitation. For example, a host of a videoconference may require that the videoconference is performed with a high trust level indicated in one or more conference settings stored in memory. For example, a conference setting may indicate that verification of audio device data is required in the conference and accordingly a low or no trust level may be set or selected also in case where no audio device data are present in the audio data. For example, a conference setting may indicate that verification of video device data is required in the conference and accordingly a low or no trust level may be set or selected also in case where no video device data are present in the audio data. Conference settings may be stored in memory of the audio device (s) and/or communication device(s).

For example, a conference setting may indicate that use of audio device, such as use of a specific type of audio device or a specific audio device, e.g. a headset or a specific headset, is required in the conference and accordingly a low or no trust level may be set or selected also in case where the required audio device is not used. In other words, the audio device data may comprise an audio device type identifier, wherein the trust level is optionally based on the audio device type identifier.

For example, a conference setting may indicate that use of video device, such as use of a specific type of video device or a specific video device, e.g. a stationary video device or a video device e.g. associated with a participant, is required in the conference and accordingly a low or no trust level may be set or selected also in case where the required video device is not used. In other words, the video device data may comprise a video device type identifier, wherein the trust level is optionally based on the video device type identifier.

Conference settings may indicate required trust levels for the conference. In other words, the conference settings may comprise one or more trust level parameters indicative of required trust levels for the conference. For example, different trust levels may be required for different participants in the conference.

In one or more examples, the method comprises determining whether the trust level(s) satisfies a conference criterion based on the conference settings, such as based on one or more trust level parameters of the conference settings, and in accordance with a determination that trust level(s) does not satisfy the conference criterion, terminating or ending the conference and/or terminating or pausing a connection to a participant whose media data does not provide a satisfactory trust level.

For example, the method may comprise, in accordance with a determination that a trust level based on media data associated with a participant in the conference does not satisfy the conference criterion, terminating the conference or terminating the connection to the communication device of the participant whose media data does not satisfy the conference criterion.

In one or more examples, the method comprises determining whether the trust level(s) satisfies a termination criterion based on the conference settings, such as based on one or more trust level parameters of the conference settings, and in accordance with a determination that trust level(s) satisfy the termination criterion, terminating or ending the conference and/or terminating or pausing a connection to a participant whose media data does not provide a satisfactory trust level.

The method may comprise controlling the conference, such as conference connections based on the trust level.

For example, the method may comprise, in accordance with a determination that a trust level based on media data associated with a participant in the conference satisfies the termination criterion, e.g. by the trust level changing to "no trust" or "low trust", terminating the conference or terminating the connection to the communication device of the participant whose media data provide a trust level that satisfies the termination criterion.

In one or more examples, determining a trust level comprises determining a trust score and selecting the trust level from a set of trust levels, e.g. based on the trust score. In other words, a trust score may be translated to a trust level that may be mapped to or used for selecting a suitable output and/or controlling the conference.

In one or more examples, providing an output indicative of the trust level comprises providing a first output in accordance with a determination that the trust level is a first trust level and providing a second output in accordance with a determination that the trust level is a second trust level.

In one or more examples, providing the first output comprises displaying a first user interface element on a display, e.g. of communication device, and/or outputting a first audio signal via a loudspeaker, e.g. of communication device or audio device. Displaying a first user interface element may comprise providing a frame with a first color around a window displaying video, e.g. in communication application running on communication device. Displaying a first user interface element may comprise providing text, a figure, and/or character, e.g. with a first color, in and/or adjacent to a window displaying video, e.g. in communication application running on communication device. For example, when the first trust level is a level of no trust, displaying a first user interface element may comprise providing a blinking red "X" and text "No trust detected", in a window displaying video, e.g. in communication application running on communication device.

In one or more examples, providing the second output comprises displaying a second user interface element on a display, e.g. of communication device, and/or outputting a second audio signal via a loudspeaker, e.g. of communication device or audio device. Displaying a second user interface element may comprise providing a frame with a second color around a window displaying video, e.g. in communication application running on communication device. Displaying a second user interface element may comprise providing text, a figure, and/or character, e.g. with a second color, in a window displaying video, e.g. in communication application running on communication device. For example, when the second trust level is a level of high trust, displaying a second user interface element may comprise providing a frame with a green color around a window displaying video, e.g. in communication application running on communication device.

In one or more examples, providing an output indicative of the trust level comprises providing such as displaying a trust indicator indicative of the trust level. The trust indicator may a number or a bar indicator.

In one or more examples, determining a trust level comprises determining the trust level at least once per 10 minutes, such as at least once per minute, such as at least 10 times per minute, such as at least once per second. Thus, the trust level may be determined and communicated substantially in real-time.

In one or more examples, the audio data comprises biometric data indicative of biometric sensor data obtained with one or more sensors of the audio device, and wherein determining a trust level associated with the media stream comprises determining the trust level based on the biometric data.

In one or more examples, the biometric data comprises one or more of EEG data, blood flow data, pulse data, motion data, jaw movement data, ear geometry data, fingerprint data, voiceprint data, ear canal geometry data, and face geometry data.

In one or more examples, the biometric data comprises a biometric signature, and wherein determining the trust level based on the biometric data comprises verifying the biometric signature.

The method may comprise applying a digital signature scheme to the biometric data, such as EEG data, blood flow data, pulse data, motion data, jaw movement data, ear geometry data, fingerprint data, voiceprint data, ear canal geometry data, face geometry data for provision of the biometric signature. Verified and/or authenticated biometric data may increase the trust level. In other words, a trust level based on verified and/or authenticated biometric data may be higher than a trust level not based on biometric data. A trust level based on verified and/or authenticated biometric data may be higher than a trust level based on non-verified and/or non-authenticated biometric data. A trust level not based on biometric data, e.g. when the transmitting audio device does not have a signing/authentication capability, may be higher than a trust level based on non-verified and/or non-authenticated biometric data.

Non-verified biometric data may decrease the trust level. In one more examples, a non-verification of, e.g. failure to verify, the biometric data may lead to a trust level indicative of no or very low trust.

In one or more examples, the biometric data may comprise a security capability parameter indicative of security capabilities associated with the biometric data, such as biometric data collection and/or signing capability of the audio device transmitting the audio data. In one or more examples, the security capability parameter of the biometric data may be zero or "Null" to indicate no biometric data collection/signing/authentication capability of the audio device collecting and/or transmitting the biometric data. Determining a trust level may be based on the security capability parameter of the biometric data.

In one or more examples, verifying the biometric signature is based on the audio key.

In one or more examples, the media data comprises location data indicative of a device location, and wherein determining a trust level associated with the media stream comprises determining the trust level based on the location data.

In one or more examples, the location data comprises a location signature, and wherein determining the trust level based on the location data comprises verifying the location data. Verified and/or authenticated location data may increase the trust level. In other words, a trust level based on verified and/or authenticated location data may be higher than a trust level not based on location data. A trust level based on verified and/or authenticated location data may be higher than a trust level based on non-verified and/or non-authenticated location data. A trust level not based on location data, e.g. when the transmitting audio device does not have a signing/authentication capability, may be higher than a trust level based on non-verified and/or non-authenticated location data.

Non-verified location data may decrease the trust level. In one more examples, a non-verification of, e.g. failure to verify, the location data may lead to a trust level indicative of no or very low trust.

In one or more examples, verifying the location signature is based on one or more of the audio key, the video key, and the communication key.

In one or more examples, determining a trust level associated with the media stream based on the media data comprises determining an artefact parameter indicative of presence of artefacts in one or both of the audio data and the video data and determining the trust level based on the artefact parameter. An artefact parameter satisfying an artefact criterion may be indicative of a high risk of deep faking, thereby reducing the trust level, e.g. to no or low trust.

In one or more examples, the media data comprises one or more of a connection security parameter, a network identifier, and a connection identifier, and wherein determining a trust level associated with the media stream comprises determining the trust level based on one or more of the connection security parameter, a network identifier, and a connection identifier. The connection security parameter may be indicative of the security associated with one or more connections to other participants in the conference. For example, use of a public WIFI for the transmitting communication device may result in a low connection security parameter compared to use of a GPS connection for the transmitting communication device.

In one or more examples, the method comprises receiving media data associated with a media stream, the media data comprising one or both of audio data representative of audio and video data representative of video may comprise receiving, at a first communication device of a first participant, second media data and optionally third media data, the second media data associated with a second media stream from a second communication device, the second media data comprising one or both of second audio data representative of audio and second video data representative of video, the third media data associated with a third media stream from a third communication device, the third media data comprising one or both of third data representative of audio and third video data representative of video; determining one or more trust levels based on the second media data and/or the third media data; and providing an output indicative of the one or more trust levels. In other words, a plurality of trust levels may be determined and output, such as a trust level for each participant in a conference, such as an audio/tele conference or videoconference.

In one or more examples, an electronic device comprising an interface, memory circuitry and processor circuitry is provided, the processor circuitry configured to perform the method as described herein. The electronic device may be a communication device or an audio device.

In one or more examples, an electronic device is provided, the electronic device comprising an interface, memory circuitry and processor circuitry, the processor circuitry configured to receive, via the interface, media data associated with a media stream, the media data comprising one or both of audio data representative of audio and video data representative of video; determine a trust level associated with the media stream based on the media data; and provide, via the interface, an output indicative of the trust level.

In one or more examples, the electronic device is a communication device or an audio device.

It is noted that descriptions and features of electronic device functionality, such a processor circuitry configured to, also apply to methods of operating an electronic device and vice versa. For example, a description of processor circuitry configured to determine also applies to a method, e.g. of operating an electronic device, wherein the method comprises determining and vice versa.

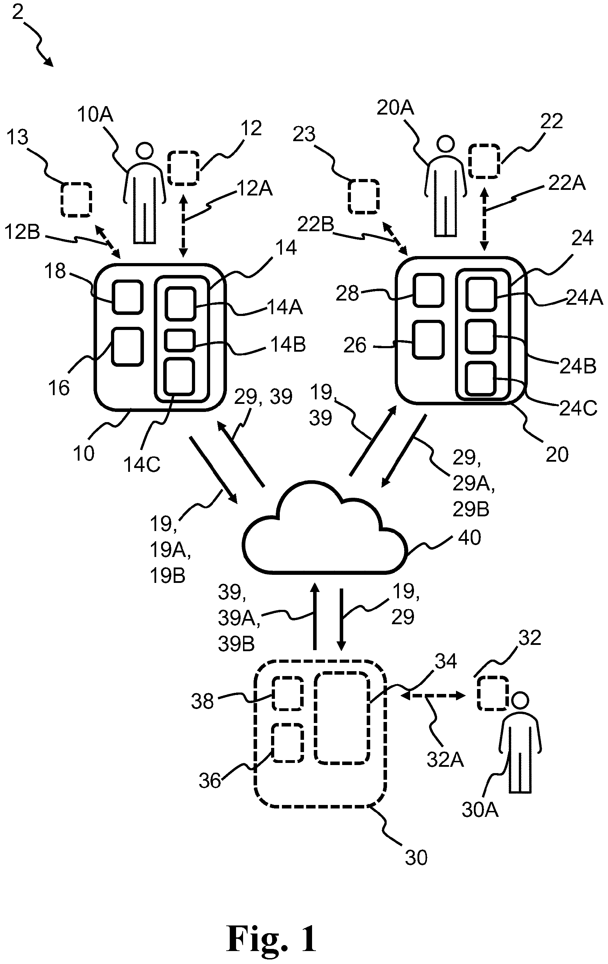

Fig. 1 shows an example communication system 2 comprising a first communication device 10 and a first audio device 12 via connection 12A (wireless and/or wired) used by first user 10A also denoted first participant, e.g. of a conference, such as audio conference or videoconference. The first communication device 10 is a communication device as described herein and comprises an interface 14, memory circuitry 16, and processor circuitry 18. The first communication device 10 is configured to, e.g. during a conference, obtain and transmit, via the interface 14, first media data 19 associated with a media stream and including first audio data 19A and first video data 19B. The first audio data 19A or at least part thereof may be obtained with one or more microphones of the first audio device 12 and transmitted to the first communication device 10 via connection 12A. The first audio data 19A or at least part thereof may be obtained with a communication microphone 14A of the interface 14 in first communication device 12. The first video data 19B or at least part thereof may be obtained with a camera of a first video device 13 and transmitted to the first communication device 10 via connection 12B (wireless and/or wired). The first video data 19B or at least part thereof may be obtained with a camera 14B of the interface 14 in first communication device 10.

The communication system 2 comprises a second communication device 20 and a second audio device 22 via connection 24 (wireless and/or wired) used by second user 20A also denoted second participant, e.g. of the conference, such as audio conference or videoconference. The second communication device 20 may be a communication device as described herein and comprises an interface 24, memory circuitry 26, and processor circuitry 28. The second communication device 20 is configured, e.g. during the conference, to obtain and transmit, via the interface 24, second media data 29 associated with a media stream and including second audio data 29A and second video data 29B. The second audio data 29A or at least part thereof may be obtained with one or more microphones of the second audio device 22 and transmitted to the second communication device 20 via connection 22A. The second audio data 29A or at least part thereof may be obtained with a communication microphone 24A of the interface 24 in second communication device 22. The second video data 29B or at least part thereof may be obtained with a camera of a second video device 23 and transmitted to the second communication device 20 via connection 22B (wireless and/or wired). The second video data 19B or at least part thereof may be obtained with a camera 24B of the interface 24 in second communication device 20.

The communication system 2 optionally comprises a third communication device 30 and a third audio device 32 via connection 34 (wireless and/or wired) used by third user 30A also denoted third participant, e.g. of the conference, such as audio conference or videoconference. The third communication device 30 may be a communication device as described herein and comprises an interface 34, memory circuitry 36, and processor circuitry 38. The third communication device 30 is configured to, e.g. during the conference, obtain and transmit, via the interface 34, third media data 39 associated with a media stream and including third audio data 39A and third video data 39B. The third audio data 39A or at least part thereof may be obtained with one or more microphones of the third audio device 32 and transmitted to the third communication device 30 via connection 32A. The third audio data 39A or at least part thereof may be obtained with a communication microphone of the interface 24 in third communication device 12.

In the first communication device 10, the processor circuitry 28 is configured to, e.g. during the conference, receive, via the interface 14 and from communication devices 20, 30 via network 40 media data 29, 39 associated with the media stream, the media data comprising one on both of audio data 29A, 39A representative of audio and video data 29B, 39B representative of video; determine trust level(s) associated with the media stream based on the media data 29, 39; and provide, via the interface 14, such as via display 14C, an output indicative of the trust level. The first communication device 10 may be configured to control, such as terminate, the conference, such as terminate one or more connections in the conference, based on the trust level(s).

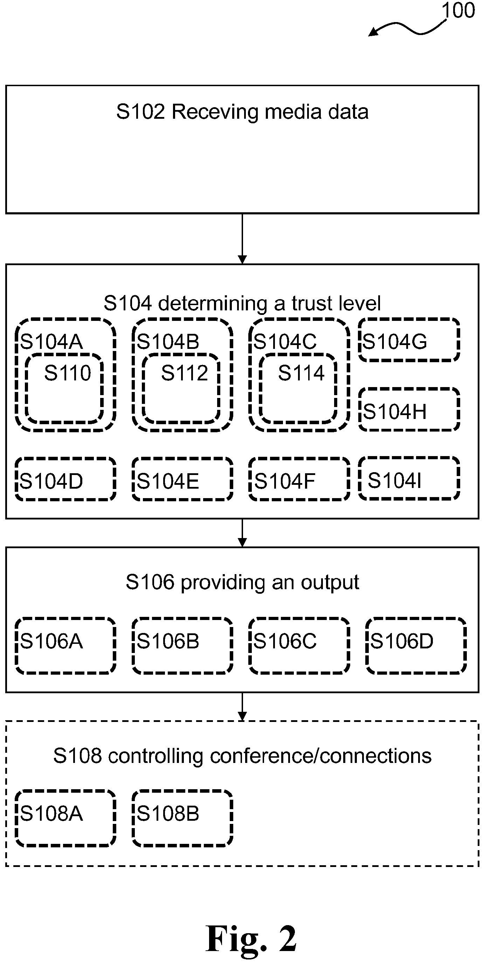

Fig. 2 is a flow diagram of an exemplary method 100 of operating an electronic device comprising processor circuitry, such as one or more of audio devices 12, 22, 32 and/or one or more of communication devices 10, 20, 30, according to this disclosure. The The method 100 comprises receiving S102 media data associated with a media stream, e.g. during a confence, the media data comprising one or both of audio data representative of audio and video data representative of video; determining S104 a trust level associated with the media stream based on the media data; and providing S106 an output indicative of the trust level.

Optionally, the method 100 comprises determining S104A the trust level based on audio device data. Determining S104A the trust level based on the audio device data may comprise verifying S110 the audio device signature, e.g. based on an audio key.

Optionally, the method 100 comprises determining S104B the trust level based on video device data. Determining S104B the trust level based on the video device data may comprise verifying S112 the video device signature, e.g. based on a video key.

Optionally, the method 100 comprises determining S104C the trust level based on communication device data. Determining S104C the trust level based on the media data may comprise verifying S114 the communication device signature, e.g. based on a communication key.

Optionally, determining S104 a trust level comprises determining S 104D a trust score and selecting S104E the trust level from a set of trust levels based on the trust score.

Determining S104 a trust level associated with the media stream may comprise determining S104F the trust level based on biometric data, the biometric data comprising one or more of EEG data, blood flow data, pulse data, motion data, jaw movement data, ear geometry data, fingerprint data, voiceprint data, ear canal geometry data, and face geometry data.

Determining S104 a trust level associated with the media stream may comprise determining S104G the trust level based on the location data optionally comprising verifying the location data, e.g. based on the audio key.

Determining S104 a trust level associated with the media stream based on the media data may comprise determining S104H an artefact parameter indicative of presence of artefacts in one or both of the audio data and the video data and determining the trust level based on the artefact parameter.

Determining S104 a trust level associated with the media stream may comprise determining S104I the trust level based on one or more of the connection security parameter, a network identifier, and a connection identifier.

In method 100, providing an output indicative of the trust level may comprise providing S106A a first output in accordance with a determination that the trust level is a first trust level and optionally providing S106B a second output in accordance with a determination that the trust level is a second trust level.

Providing S106 the first output may comprise displaying S106C a first user interface element on a display and/or outputting S106Da first audio signal via a loudspeaker.

Optionally, the method 100 comprises controlling S108 the conference, such as conference connections, based on trust level(s). In one or more examples, the method comprises determining S108A whether the trust level(s) satisfies a termination criterion based on the conference settings, such as based on one or more trust level parameters of the conference settings, and in accordance with a determination that trust level(s) satisfy the termination criterion, e.g. if no trust or low trust is determined, terminating S108B the conference and/or terminating S108C a connection to a participant whose media data does not provide a satisfactory trust level.

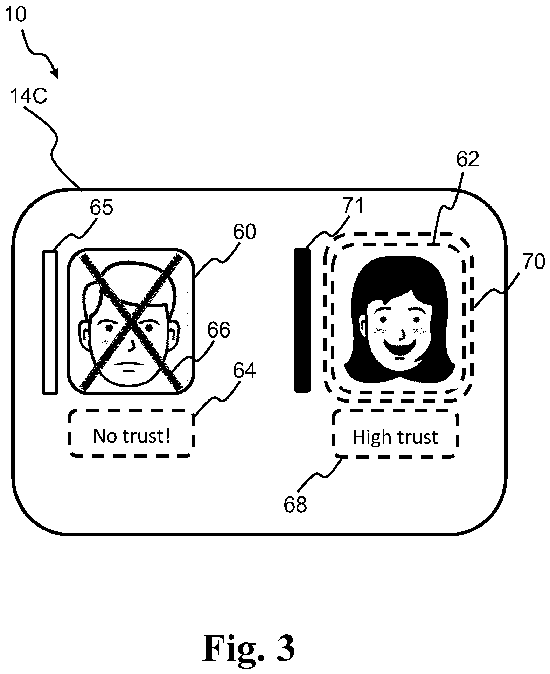

Fig. 3 shows an example display 14C of the first communication device 10 running a communication application e.g. in communication system of Fig. 1. The communication device 10 receives media data associated with a media stream including second media data 29 and optionally third media data 39, the second media data 29 comprising second audio data 29A representative of audio and second video data 29B representative of video, the third media data 39 comprising third audio data 39A representative of audio and third video data 29B representative of video. Second video representing the second video data 29B are displayed in primary window 60 and optionally, third video representing the third video data 39B are displayed in secondary window 62. The processor circuitry of communication device 10 determines a trust level based on the second media data 29; and provides an output indicative of the trust level. As illustrated, the trust level based on the second media data has been determined to a first trust level of No trust, e.g. due to non-verification of second audio device data of the second audio data 29A and/or non-verification of the second communication device data. Accordingly, a first output is provided, wherein providing the first output comprises displaying a first user interface element, wherein displaying a first user interface element comprises providing a first primary user interface element 64 with the text "No trust!" adjacent the primary window 60 and/or a first secondary user interface element 66 with a blinking red "X" in the primary window 60 displaying second video. Optionally, the first communication device 10 outputs a first audio signal, such as a voice message or beeping alarm signal, indicative of a determination of no trust associated with the second media data 29 to the first audio device 12. Optionally, displaying a first user interface element comprises providing a first tertiary user interface element 65 being a trust level indicator, such a bar indicator and/or a value, adjacent the primary window 60.

Optionally, the processor circuitry of communication device 10 determines a trust level based on the third media data 39; and provides an output indicative of the trust level. As illustrated, the trust level based on the third media data has been determined to a second trust level of High trust, e.g. due to verification of third audio device data of the third audio data 39A and verification of the third communication device data. Accordingly, a second output is provided, wherein providing the second output comprises displaying a second user interface element, wherein displaying a second user interface element comprises providing a second primary user interface element 68 with the text "High trust" adjacent the secondary window 62 and/or a second secondary user interface element 70 with a green frame around the secondary window 62 displaying third video. Optionally, displaying a second user interface element comprises providing a second tertiary user interface element 71 being a trust level indicator, such a bar indicator and/or a value, adjacent the secondary window 62.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It may be appreciated that the figures comprise some modules or operations which are illustrated with a solid line and some modules or operations which are illustrated with a dashed line. The modules or operations which are comprised in a solid line are modules or operations which are comprised in the broadest example embodiment. The modules or operations which are comprised in a dashed line are example embodiments which may be comprised in, or a part of, or are further modules or operations which may be taken in addition to the modules or operations of the solid line example embodiments. It should be appreciated that these operations need not be performed in order presented. Furthermore, it should be appreciated that not all of the operations need to be performed. The example operations may be performed in any order and in any combination.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims, that the example embodiments may be implemented at least in part by means of both hardware and software, and that several "means", "units" or "devices" may be represented by the same item of hardware.

The various example methods, devices, and systems described herein are described in the general context of method steps processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform specified tasks or implement specific abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly, to be regarded in an illustrative rather than restrictive sense. The claimed invention is intended to cover all alternatives, modifications, and equivalents.

## Claims

1. A method of operating an electronic device comprising processor circuitry, the method comprising:
receiving media data associated with a media stream, the media data comprising one or both of audio data representative of audio and video data representative of video;
determining a trust level associated with the media stream based on the media data; and
providing an output indicative of the trust level.

2. Method according to claim 1, the audio data comprising audio device data indicative of an audio device used for capturing the audio, and wherein determining a trust level based on the media data comprises determining the trust level based on the audio device data.

3. Method according to claim 2, the audio device data comprising an audio device signature, and wherein determining the trust level based on the audio device data comprises verifying the audio device signature.

4. Method according to claim 3, the audio device data comprising an audio device identifier, the method comprising obtaining an audio key based on the audio device identifier, and wherein verifying the audio device signature is based on the audio key.

5. Method according to any one of claims 1-4, the video data comprising video device data indicative of a video device used for capturing the video, and wherein determining a trust level based on the media data comprises determining the trust level based on the video device data.

6. Method according to claim 5, the video device data comprising a video device signature, and wherein determining the trust level based on the video device data comprises verifying the video device signature.

7. Method according to claim 6, the video device data comprising a video device identifier, the method comprising obtaining a video key based on the video device identifier, and wherein verifying the video device signature is based on the video key.

8. Method according to any one of claims 1-7, the media data comprising communication device data indicative of a communication device used for transmitting the media data, and wherein determining a trust level based on the media data comprises determining the trust level based on the communication device data.

9. Method according to claim 8, the communication device data comprising a communication device signature, and wherein determining the trust level based on the media data comprises verifying the communication device signature.

10. Method according to claim 9, the communication device data comprising a communication device identifier, the method comprising obtaining a communication key based on the communication device identifier, and wherein verifying the communication device signature is based on the communication key.

11. Method according to any one of claims 1-10, wherein determining a trust level comprises determining a trust score and selecting the trust level from a set of trust levels based on the trust score.

12. Method according to any one of claims 1-11, wherein providing an output indicative of the trust level comprises providing a first output in accordance with a determination that the trust level is a first trust level and providing a second output in accordance with a determination that the trust level is a second trust level.

13. Method according to claim 12, wherein providing the first output comprises displaying a first user interface element on a display and/or outputting a first audio signal via a loudspeaker.

14. Method according to any one of claims of claims 1-13 as dependent on claim 2, wherein the audio data comprises biometric data indicative of biometric sensor data obtained with one or more sensors of the audio device, and wherein determining a trust level associated with the media stream comprises determining the trust level based on the biometric data.

15. Method according to claim 14, wherein the biometric data comprises one or more of EEG data, blood flow data, pulse data, motion data, jaw movement data, ear geometry data, fingerprint data, voiceprint data, ear canal geometry data, and face geometry data.

16. Method according to any one of claims 14-15, the biometric data comprising a biometric signature, and wherein determining the trust level based on the biometric data comprises verifying the biometric signature.

17. Method according to claim 15 as dependent on claim 4, wherein verifying the biometric signature is based on the audio key.

18. Method according to any one of claims of claims 1-17, wherein the media data comprises location data indicative of a device location, and wherein determining a trust level associated with the media stream comprises determining the trust level based on the location data.

19. Method according to claim 18, the location data comprising a location signature, and wherein determining the trust level based on the location data comprises verifying the location data.

20. Method according to claim 19 as dependent on claim 4, wherein verifying the location signature is based on the audio key.

21. Method according to any of claims 1-20, wherein determining a trust level associated with the media stream based on the media data comprises determining an artefact parameter indicative of presence of artefacts in one or both of the audio data and the video data and determining the trust level based on the artefact parameter.

22. Method according to any of claims 1-21, the media data comprising one or more of a connection security parameter, a network identifier, and a connection identifier, and wherein determining a trust level associated with the media stream comprises determining the trust level based on one or more of the connection security parameter, a network identifier, and a connection identifier.

23. Method according to any of claims 1-22, the method comprising controlling a conference between participants based on the trust level.

24. Method according to claim 23, wherein controlling the conference based on the trust level comprises determining whether the trust level satisfies a termination criterion, e.g. based on one or more conference settings; and in accordance with a determination that the trust level satisfies the termination criterion, terminating the conference and/or terminating a connection to a participant in the conference.

25. Electronic device comprising an interface, memory circuitry, and processor circuitry, the processor circuitry configured to perform the method according to any one of claims 1-24.

26. Electronic device according to claim 25, wherein the electronic device is a communication device or an audio device.

27. Electronic device comprising an interface, memory circuitry, and processor circuitry, the processor circuitry configured to:
receive, via the interface, media data associated with a media stream, the media data comprising one or both of audio data representative of audio and video data representative of video;
determine a trust level associated with the media stream based on the media data; and
provide, via the interface, an output indicative of the trust level.

28. Electronic device according to claim 27, wherein the electronic device is a communication device or an audio device.
